# EUROPÄISCHE PATENTANMELDUNG

(11) **EP 0 764 613 A2**
(43) Veröffentlichungstag der Anmeldung: **26.03.1997**
(21) Anmeldenummer: 96115059.6
(22) Anmeldetag: 19.09.1996
(51) Int. Cl.: C02F 9/00, C02F 1/52, C02F 1/32, C02F 11/00, C02F 11/12, C02F 1/76, C02F 1/72, C02F 1/78, B09B 3/00

(54) **Verfahren und Vorrichtung zur Reinigung von kommunalen bzw. häuslichen Abwässern**

(30) Priorität: 22.09.1995 DE 19535171
(71) Anmelder: Teufert, Friedrich, 81667 München (DE); Schandl, Rudolf, 81371 München (DE)
(72) Erfinder: Teufert, Friedrich, 81541 München (DE)
(74) Vertreter: Säger, Manfred, Dipl.-Ing.

(57) **Zusammenfassung**

Die Erfindung betrifft ein Verfahren zur Reinigung von kommunalen bzw. häuslichen Abwässern, das dadurch gekennzeichnet ist, daß die Abwässer nach mechanischer Zerkleinerung und Vorreinigung von großstückigen Bestandteilen
a) mit ungiftigen Flockungsmitteln behandelt werden, die im wesentlichen die organischen Bestandteile ausflocken, und
b) die Ausflockungen und die wäßrige Phase voneinander getrennt werden, oder
c) einer Reinigungsstufe mit einem Feinsiebsystem unterzogen werden,
d) mit Oxidationsmitteln und nach Bedarf physikalisch mit ultravioletter Strahlung behandelt werden, und
e) gegebenenfalls noch vorhandene Ausflockungen und die wäßrige Phase voneinander getrennt werden.

## Beschreibung

Die vorliegende Erfindung betrifft ein Verfahren und eine Vorrichtung zur Reinigung von kommunalen bzw. häuslichen Abwässern.

Kommunale und hausliche Abwässer werden nach einer mechanischen Vorreinigung einer biologischen Reinigungsstufe unterworfen bei der die Abwässer über Tropfkörper oder dergleichen geleitet werden, auf denen die Schadstoffe durch von Mikroorganismen gebildeten biologischen "Rasen" unter aeroben Bedingungen abgebaut werden. Dieser Rasen ist zwar ein sehr intensiv arbeitendes ökologisches System, es hat aber den Nachteil, daß es durch giftige Stoffe, Öle und dergleichen geschädigt wird und seine Funktion dann nicht mehr erfüllt. Außerdem fallen bei diesem Verfahren große Mengen an Klärschlamm an, der nahezu die gesamten im Abwasser enthaltenen Schwermetalle enthält und der sich daher schwer entsorgen läßt.

Aufgabe der vorliegenden Erfindung ist es, ein Verfahren und eine Vorrichtung zur Reinigung solcher Abwässer zu schaffen, das keine biologische Stufe benötigt und daher gegenüber biologischen Giften seine Wirksamkeit behält und das darüber hinaus den Anfall von Klärschlamm vermeidet.

Gelöst wird diese Aufgabe erfindungsgemäß durch ein Verfahren bzw. eine Vorrichtung nach dem Oberbegriff der Verfahrens- bzw. Vorrichtungsansprüche mit den Merkmalen von deren kennzeichenden Teilen.

Die zu reinigenden Abwässer werden zunächst in üblicher Weise mit einem Grobrechen von gröberen Gegenständen und Materialien gereinigt, wie z.B. Holzstücke, Blechdosen, Kunststoffartikel und dergleichen. Dann werden sie mit einem geeigenten Zerkleinerer, beispielsweise einer Messermühle, zerkleinert. Dabei hat sich eine Zerkleinerung auf eine Teilchengröße kleiner als 3 cm a]s zweckmäßig erwiesen.

Die Abwässer werden dann in einem geeigneten Gefäß, beispielsweise einem Eindicker, mit einem ungiftigen Flockungsmittel versetzt, durch das die organischen Bestandteile des Abwassers ausgeflockt werden. Flockungsmittel für organische Bestandteile sind bekannt. Beispielsweise lassen sich hierfür wasserlösliche makromolekulare Verbindungen verwenden, die durch Polymerisation oder Copolymerisation hergestellt worden sind, z. B. von Acrylderivaten.

Das Ausflocken der organischen Bestandteile mit Flockungsmitteln hat den Vorteil, daß im wesentlichen alle anorganischen Stoffe, insbesondere auch die Schwermetalle, in Lösung bleiben. Im Gegensatz zu den herkömmlichen biologischen Abwassereinigungsverfahren, bei denen die Schwermetalle in den Klärschlamm gelangen, bleiben sie beim erfindungsgemäßen Verfahren in Lösung und verunreinigen nicht die organischen Bestandteile.

In einer alternativen Ausführungsform des erfindungsgemäßen Verfahrens werden die Abwässer nach mechanischer Zerkleinerung einer ersten Reinigungsstufe mit einem Feinsiebsystem unterzogen. Das Feinsiebsystem soll eine Maschenweite von mindestens 150 µm, vorzugsweise 40 um und ganz besonders bevorzugt wenigstens 30 µm aufweisen. Dabei werden als Feinsiebsysteme vorzugsweise Drehfilter eingesetzt, die sich um eine waagerechte Achse drehen. Solche Drehfilter sind beispielsweise als Discostrainer der Firma Noggerath, Ahnsen, im Handel.

Die Feinsiebsysteme können auch aus mehreren hintereinander geschalteten Feinsiebsystemen bestehen, beispielsweise einem Drehfilter mit einer Maschenweite von 150 um und einem nachgeschalteten Kiesfilter mit einer mittleren Porengröße von 40 bzw. 30 µm.

Die feingesiebten Abwässer können danach unmittelbar einer Oxidationsbehandlung unterzogen werden, beispielsweise mit Luft, Sauerstoff, Wasserstoffperoxid oder Ozon. Bei dieser Oxidationsbehandlung anfallende Ausflockungen können vor dem Ableiten des gereinigten Abwassers in den Vorfluter noch auf bekannte Weise abfiltriert werden.

Durch einen Eindicker mit Hochklärungsstufe läßt sich eine weitgehende Abtrennung der ausgeflockten Stoffe erreichen. Diese ausgeflockten Stoffe können einer Kompostierung zugeführt werden.

Die ausgeflockten Stoffe können auch mit Faserstoffen vermischt werden, beispielsweise mit gemahlenem Stroh, Altpapier, Baumrinde oder dergleichen.

Läßt sich der ausgeflockte Schlamm nicht für eine Kompostierung verwenden, beispielsweise weil wegen eines zu hohen Gehalts des Abwassers an Schwermetallen diese bei der Ausflockung mitgerissen werden, so kann er einer Verbrennung oder Vergasung zugeführt werden. Dabei hat es sich als zweckmäßig erwiesen, den Schlamm zu entwässern, mit Kalk zu vermischen und zu Kartuschen zu verpressen. In dieser Form kann er einer Vergasungsganlage zugeführt werden.

Nach der Abtrennung der ausgeflockten Stoffe ist das Abwasser optisch bereits relativ sauber. Es kann dann einer oxidativen Behandlung unterworfen werden, wofür vorzugsweise Wasserstoffperoxyd oder Ozon verwendet wird. Zusätzlich kann das Abwasser physikalisch behandelt werden, um z.B. Mikroorganismen abzutöten. Die physikalische Behandlung kann aus einer Erhitzung oder einer UV-Behandlung bestehen. Vor diesen Behandlungsschritten kann das Abwasser auch noch mit Chlor behandelt werden.

Durch diese Behandlungen werden Mikroorganismen abgetötet; außerdem findet eine Oberfächenvergrößerung der im Abwasser verbliebenen Schwebstoffe statt.

Anschließend wird das Abwasser filtriert, wofür sich ein Kiesfilter als zweckmäßig erwiesen hat. Die abfiltrierte wäßrige Phase kann als Brauchwasser in das Verfahren zurückgeführt werden; es kann aber auch in Schlickbrunnen oder Gewässer eingeleitet werden, z.B. in Bäche, Flüsse oder Seen.

Die im Kiesfilter anfallenden Feststoffe enthalten im wesentlichen die Schwermetalle des Abwassers. Sie können durch Umkehrosmose gewonnen werden, wobei eine nachgeschaltete Hochdruckstufe die Wirksamkeit erhöht. Der Extrakt der Umkehrosmose kann elektrolytisch aufgearbeitet werden, wobei u. a. die Schwermetalle Cadmium, Zink, Kupfer, Chrom, Silber etc. gewonnen werden können. Da die Elektrolyse diskontinuierlich durchgeführt wird, ist zur Ansammlung des Abwassers vorgesehen, Tagesbehälter einzusetzen.

Die Vorrichtung zur Durchführung des Verfahrens enthält einen Grobrechenn an der Eingangsseite, eine nachgeschaltete Messermühle, einen nachgeschalteten Eindicker bzw. ein Oxidationsgefäß sowie einen nachgeschalteten Klärer zur Abtrennung der Ausflockungen. Die Behandlung mit dem Flockungsmittel wird zweckmäßigerweise in dem Eindicker mit einer Kochklärungsstufe durchgeführt.

Als Kiesfilter zur Abtrennung der bei der oxidativen Behandlung erhaltenen Fest- und Schwebstoffe haben sich rückspülende Kiesfilter als zweckmäßig erwiesen. Rückspülende Kiesfilter sind bekannt und beispielsweise als DynaSand-Filter im Handel. Das Rückspülwasser aus dem Kiesfilter kann als Brauchwasser in den Eindicker zurückgeführt werden. Bei hohem Gehalt an Schwermetallen kann zwischen dem Eindicker und dem Kiesfilter eine zusätzliche Eindickerstufe zwischengeschaltet werden.

Die Erfindung wird nachfolgend anhand der Figurenbeschreibung beispielhaft näher erläutert. Hierin zeigt:

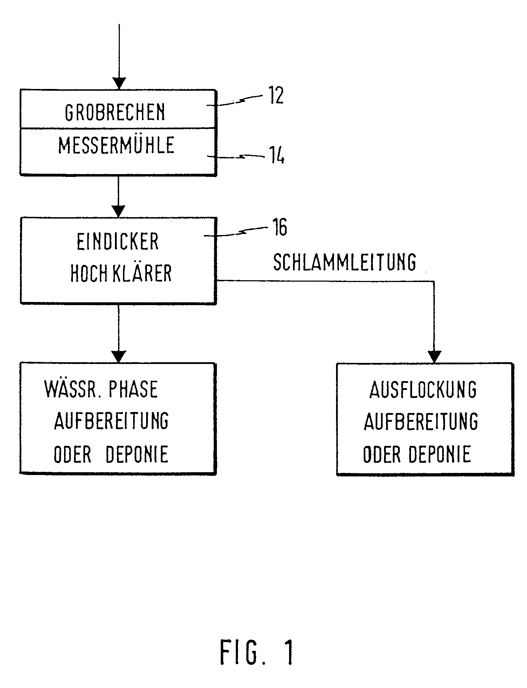

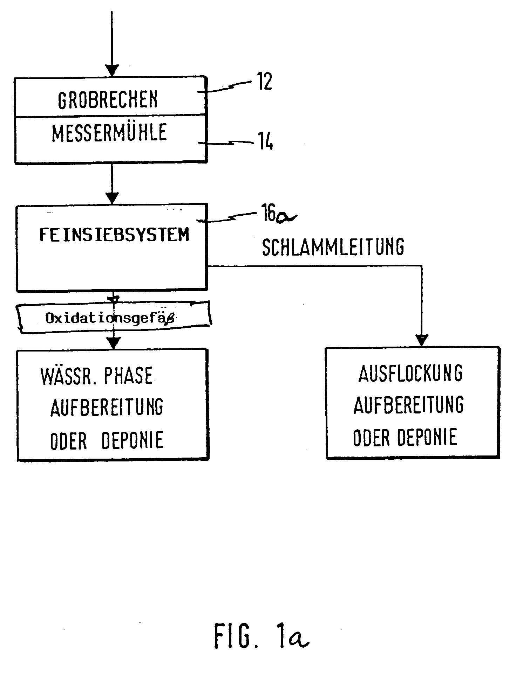

- Figur 1: ein Fließschema des Verfahrens;
- Figur 1a: ein alternatives Fließschema des Verfahrens; und

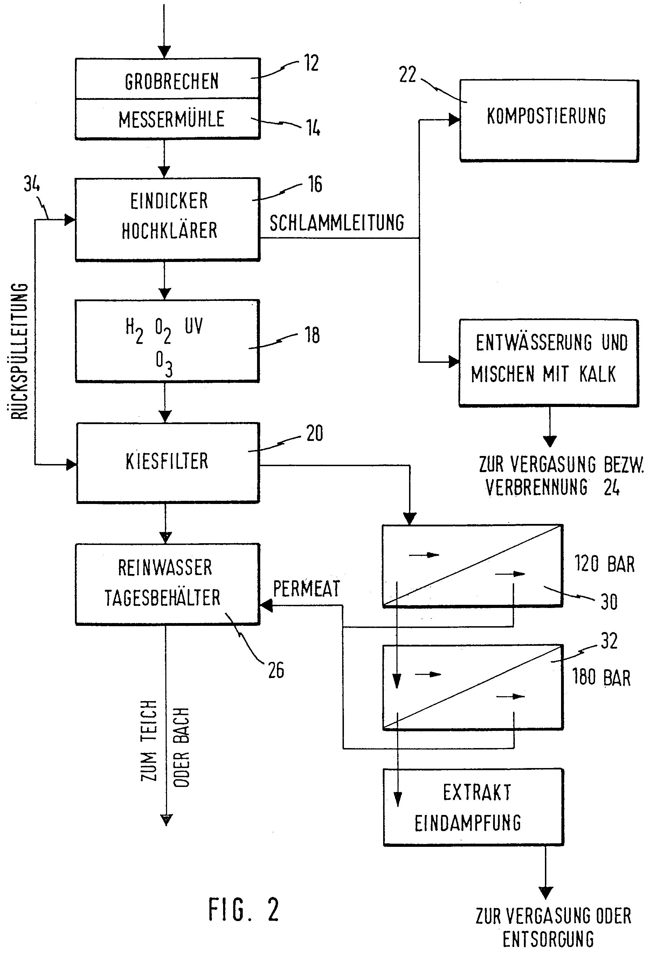

- Figur 2: ein Fließschema des Verfahrens mit nachgeschalteter getrennter Aufarbeitung der bei der Ausflockung erhaltenen Phasen.

Das zu klärende Abwasser gelangt an der Eingangsseite über einen Grobrechen 12 in die Kläranlage. Dem Grobrechen ist eine Messermühle 14 nachgeschaltet, in der die Feststoffe möglichst weitgehend zerkleinert werden, z.B. auf Teilchengrößen unter 3 cm, um ein Verstopfen der Anlage zu vermeiden. Von der Messermühle 14 wird das Abwasser in eine Eindicker 16 geleitet, in dem es mit dem Flockungsmittel in Kontakt gebracht wird. Der Eindicker ist mit einer Hochklärungsstufe ausgestattet, z.B. in Form einer Lamellenklärstufe.

Anstelle des Eindickers 16 kann auch ein Oxidationsgefäß 16a vorgesehen sein, in welchem die mechanisch zerkleinerten Teilchen bis auf eine Teilchengröße von 30 um oder mehr abgetrennt werden können. An ein solches Feinsiebsystem kann sich unmittelbar eine Oxidationsbehandlung anschließen, wobei aber gegebenenfalls das Zwischenschalten einer Flockungsstufe vorteilhaft sein kann.

Die Ausflockung und die wässrige Phase werden dann voneinander getrennt, beispielsweise durch Filtration, Abpressen oder in einem Eindicker mit Klärungsstufe.

Die ausgeflockten Feststoffe können dann bei einer eventuellen Weiterverarbeitung über eine Schlammleitung in eine Kompostierung 22 oder wahlweise in eine Verbrennungs- bzw. Vergasungsanlage 24 geführt werden. Vor der Verbrennung bzw, Vergasung werden sie getrocknet, mit Kalk vermischt und zu Kartuschen verpreßt.

Die wäßrige Phase aus dem Eindicker kann bei einer Weiterverarbeitung über eine Leitung in ein Oxidationsgefäß 18 überführt werden, wo sie mit Wasserstoffperoxyd oder Ozon behandelt wird. Das dabei erhaltene reine Wasser wird einer Umkehrosmose 30 unterworfen, der eine Hochdruckstufe 32 nachgeschaltet ist. Die dabei erhaltenen Schwermetallverbindungen werden in einer Schwermetallelektrolyse 28 elektrolytisch aufgearbeitet und die Schwermetalle einer Verwertung zugeführt.

Das Rückspülwasser aus dem Kiesfilter wird über eine Rückspülleitung 34 dem Eindicker 16 oder einem separaten Eindicker zum Ausfällen von Schwermetallen zurückgeführt.

Das erfindungsgemäße Verfahren ist klärschlammfrei und zerlegt das Abwasser in seine Inhaltsstoffe, die zu 99% wieder verwertet werden können. Das geklärte Wasser kann im Verfahren zurückgeführt werden.

Das erfindungsgemäße Verfahren kann auch als Vorstufe für ein herkömmliches biologisches Abwasserreingungsverfahren verwendet werden, wobei z. B. dem Eindicker eine konventionelle Kläranlage nachgeschaltet werden kann. Dadurch kann die Kapazität vorhandener Kläranlagen vergrößert werden. Sie kann dadurch beispielsweise in etwa verdoppelt werden.

Anstelle oder nach der Kompostierung kann auch eine Biogaserzeugung eingesetzt werden, anschließend kann der ausgegorene Schlamm kompostiert oder direkt zur Düngung gefahren werden.

Die nach der Ausflockung erhaltene wäßrige Phase kann auch Filtrieren, z. B. über ein Kiesfilter, in einen Abwasserteich mit Fischen, wie Karpfen oder Schleie oder in eine Pflanzenkläranlage, z. B. mit Schilfpflanzen oder Wurzelraumverfahren geleitet werden. Weiterhin sind hier Verfahrenskombinationen mit Tiefstrombelüftungsverfahren, Biohochreaktoren oder Adsorptions-Belebungsverfahren möglich.

Darüber hinaus können Scheibentropfkörperanlagen, Tauchtropfkörper oder Tropfkörperräder eingesetzt werden

Man kann auch auf die Kiesfilter verzichten, erhält dann aber einen höheren Schlammanfall.

Durch Einsatz eines Eindickers wird die Klärtechnik optimiert oder in ihrer Größe reduziert, das gleiche gilt auch für Oxidationsgräben und Abwasserteiche.

Die Vorrichtung zur Durchführung des Verfahrens kann in Normcontainerbauweise erstellt werden und ist dann mobil. Sie stellt eine echte ökonomische und ökologische Alternative zu den herkömmlichen Kläranlagen und Klärsystemen dar.

Zweckmäßigerweise werden Abwässer behandelt, deren Sauerstoffbedarf - sowohl der CSB als auch der BSB - demjenigen von üblichen kommunalen oder häuslichen Abwässern entspricht. Bei Abwässern mit hohem Sauerstoffbedarf kann der hohe Verbrauch von Wasserstoffperoxyd oder Ozon die Wirtschaftlichkeit des Verfahrens beeinträchtigen.

## Patentansprüche

1. Verfahren zur Reinigung von kommunalen bzw. häuslichen Abwässern,
**dadurch gekennzeichnet**,
daßdie Abwässer nach mechanischer Zerkleinerung und Vorreinigung von großstückigen Bestandteilen
a) mit ungiftigen Flockungsmitteln behandelt werden, die im wesentlichen die organischen Bestandteile ausflocken, und
b) daß die Ausflockungen und die wäßrige Phase voneinander getrennt werden.

2. Verfahren nach Anspruch 1, dadurch gekennzeichnet, daß der Stufe a) der Ausflockung eine Reinigungsstufe mit einem Feinsiebsystem vorgeschaltet wird.

3. Verfahren nach Anspruch 1, dadurch gekennzeichnet, daß die nach der Ausflockung erhaltene wäßrige Phase chemisch mit Oxidationsmitteln und nach Bedarf physikalisch mit ultravioletter Strahlung behandelt wird.

4. Verfahren nach Anspruch 1, dadurch gekennzeichnet, daß die Abwässer nach mechanischer Zerkleinerung
a) einer Reinigungsstufe mit einem Feinsiebsystem unterzogen werden,
b) mit Oxidationsmitteln und nach Bedarf physikalisch mit ultravioletter Strahlung behandelt werden, und
c) gegebenenfalls noch vorhandene Ausflockungen und die wäßrige Phase voneinander getrennt werden.

5. Verfahren nach Anspruch 1 oder 4, dadurch gekennzeichnet, daß das Feinsiebsystem Ausflockungen mit einer Teilchengröße kleiner als 100 µm abtrennt.

6. Verfahren nach Anspruch 1 oder 4, dadurch gekennzeichnet, daß das Feinsiebsystem Ausflockungen mit einer Teilchengröße kleiner als 30 µm abtrennt.

7. Verfahren nach den Ansprüchen 1 und 4, dadurch gekennzeichnet, daß die nach der chemischen und gegebenenfalls physikalischen Behandlung erhaltene von der wäßrigen Phase abgetrennte Festphase deponiert oder zur Abtrennung von Metallen weiter behandelt wird.

8. Verfahren nach Anspruch 1, dadurch gekennzeichnet, daß die mechanische Zerkleinerung auf Teilchengrößen kleiner als 3 cm erfolgt.

9. Verfahren nach Anspruch 1, dadurch gekennzeichnet, daß die Ausflockungen der Stufe a) in einem Eindicker abgetrennt werden.

10. Verfahren nach Anspruch 1, dadurch gekennzeichnet, daß die Ausflockungen der Stufe a) mit Faserstoffen, wie gemahlenes Stroh, Altpapier und/oder Baumrinde vermischt werden.

11. Verfahren nach Anspruch 1 oder 10, dadurch gekennzeichnet, daß den Ausflockungen der Stufe a) zusätzlich Gülle beigemischt wird.

12. Verfahren nach Anspruch 1, dadurch gekennzeichnet, daß die Ausflockungen der Stufe a) mit Kalk vermischt, zu Kartuschen verpreßt und einem Verbrennungsprozeß unterworfen werden.

13. Verfahren nach den Ansprüchen 3 oder 4, dadurch gekennzeichnet, daß vor der chemischen Behandlung mit Oxidationsmitteln eine Behandlung mit Chlor durchgeführt wird.

14. Verfahren nach den Ansprüchen 3 oder 4, dadurch gekennzeichnet, daß die Oxidationsbehandlung mit Sauerstoff, Wasserstoffperoxyd in Anwesenheit von UV-Licht und/oder mit Ozon durchgeführt wird.

15. Verfahren nach den Ansprüchen 3 oder 4, dadurch gekennzeichnet, daß die Trennung der wäßrigen und der Festphase nach der Oxidation mit Kiesfiltern erfolgt.

16. Verfahren nach den Ansprüchen 1 oder 15, dadurch gekennzeichnet, daß die Abtrennung der Metalle aus der Festphase nach der Oxidation mit einer Umkehrosmose erfolgt.

17. Verfahren nach Anspruch 16, dadurch gekennzeichnet, daß der Umkehrosmose eine Hochdruckstufe nachgeschaltet wird.

18. Verfahren nach Anspruch 16, dadurch gekennzeichnet, daß aus der abgetrennten Festphase Schwermetalle, wie Cadmium, Zink, Kupfer, Chrom, Silber ect. elektrolytisch abgeschieden und einer Wiederverwertung zugeführt werden.

19. Verfahren nach Anspruch 1 oder 4, dadurch gekennzeichnet, daß die Ausflockungen deponiert werden.

20. Verfahren nach Anspruch 1 oder 4, dadurch gekennzeichnet, daß die Ausflockungen einem Kompostierungs- oder Verbrennungsprozeß unterworfen werden.

21. Vorrichtung zur Durchführung des Verfahrens der Ansprüche 1 bis 20, gekennzeichnet durch einen Grobrechen (12) an der Eingangsseite, eine nachgeschaltete Messermühle (14), einen der Messermühle (14) nachgeschalteten Eindicker (16) mit Hochklärungsstufe, ein dem Eindicker (16) nachgeschalteten Oxidationsgefäß (18) und einen dem Oxidationsgefäß (18) nachgeschalteten Filter (20).

22. Vorrichtung zur Durchführung des Verfahrens der Ansprüche 4 bis 20, gekennzeichnet durch einen Grobrechen (12) an der Eingangsseite, eine nachgeschaltete Messermühle (14), ein der Messermühle nachgeschaltetes Feinsiebsystem (16a), ein dem Feinsiebsystem nachgeschaltetes Oxidationsgefäß (18) und ein dem Oxidationsgefäß (18) nachgeschaltetes Filter (20).

23. Vorrichtung nach Anspruch 21 oder 22, dadurch gekennzeichnet, daß dem Eindicker (16) zusätzlich eine Kompostierungsanlage (22) oder eine Verbrennungsanlage (24) nachgeschaltet ist.

24. Vorrichtung nach Anspruch 21 oder 22, dadurch gekennzeichnet, daß dem Kiesfilter (20) Tagesbehälter (26) zur Zwischenlagerung von Abwasser nachgeschaltet sind, denen eine Schwermetallelektrolyse (28) nachgeschaltet ist.

25. Vorrichtung nach Anspruch 21 oder 22, dadurch gekennzeichnet, daß das Feinsiebsystem (16a) ein Drehfilter und/oder im Kiesfilter ist.
